# EUROPEAN PATENT SPECIFICATION

(11) **EP 1 818 363 B1**
(45) Date of publication and mention of the grant of the patent: **06.04.2011**
(21) Application number: 07250547.2
(22) Date of filing: 12.02.2007
(51) Int. Cl.: C08L 21/00, C08K 5/00, C08K 5/3415, C08K 7/06

(54) **Rubber composition**
Gummizusammensetzung
Composition en caoutchouc

(30) Priority: 08.02.2007 JP 2007029100; 13.02.2006 JP 2006035670
(43) Date of publication of application: 15.08.2007
(73) Proprietor: Bridgestone Corporation, Tokyo 104-0031 (JP)
(72) Inventor: Ohshima, Nobumitsu, c/o Bridgestone Corporation, Kodaira-shi Tokyo 187-0031 (JP)
(74) Representative: Whalley, Kevin

(56) References cited:
- JP-A- 2004 051 796
- US-A- 4 020 039
- US-A1- 2005 043 448

## Description

The present invention relates to rubber compositions, and specifically to a rubber composition that provides enhanced hysteresis loss characteristics (hereinafter simply referred to as "loss characteristics") without impairment of other properties such as breaking characteristics and tensile elongation, and a tire using the rubber composition.

Rubber compositions with high loss characteristics are generally used for tire tread rubbers to enhance grip characteristics. Some methods have been proposed to produce a rubber composition that exhibits high loss characteristics after vulcanization. Examples of such methods include (1) the addition of a large amount of carbon black, (2) the use of a polymer with high glass transition temperature (hereinafter abbreviated as "Tg"), and (3) the addition of a large amount of softener, typically, an aromatic softener (see Japanese Unexamined Patent Application Publication Nos. 1-16845, 1-103637, 2000-109610, and 2003-213040).

Although the addition of a large amount of carbon black provides high loss after vulcanization, this method undesirably decreases tensile elongation, which is one of the other important properties. Also, the use of a polymer with high Tg undesirably increases elastic modulus and decreases tensile elongation in a low temperature range (practical temperature range) after vulcanization. On the other hand, the addition of a large amount of softener provides high hysteresis loss and high tensile elongation after vulcanization, although this method has the disadvantage of significantly decreasing breaking strength and cutting resistance.

Attention is also drawn to the disclosures of JP-A-2004-051796, US-A-4020039, and US-A-2005-043448.

An object of the present invention is to provide a rubber composition that provides high loss characteristics without impairment of other properties such as breaking characteristics and tensile elongation, and a tire using the rubber composition.

The inventor has completed the present invention after intensive studies for achieving the above object. The studies have found that a rubber composition including a certain carbon material and a certain polycyclic aromatic compound exhibits a secondary dispersion peak (high loss) in addition to a primary dispersion peak (the glass transition of the matrix rubber) in the temperature dependence of loss tangent (tanδ). The rubber composition thus provides high loss characteristics without impairment of other properties such as breaking characteristics.

That is, a rubber composition according to the present invention comprises at least one rubber component selected from the group consisting of natural rubbers and synthetic rubbers, a graphitized carbon material, and a polycyclic aromatic compound having a crosslinking group which is pyrenylmaleimide or naphthalenethiol.

The graphitized carbon material is preferably vapor-grown carbon fiber. The content of the graphitized carbon material is preferably 0.1 to 100 parts by mass based on 100 parts by mass of the rubber component.

The content of the polycyclic aromatic compound is preferably 0.005 to 0.2 times the mass of the graphitized carbon material.

The rubber composition according to the present invention may further include carbon black. The content of the carbon black is preferably 0.1 to 50 times the mass of the graphitized carbon material.

Further, a tire according to the present invention uses the rubber composition as a tread material.

According to the present invention, the rubber composition can achieve high loss characteristics without impairment of other properties such as breaking characteristics and tensile elongation. Therefore, the tire using the rubber composition as a tread material has an improved grip property.

Embodiments of the present invention will now be specifically described.

A rubber component used for a rubber composition according to the present invention may be either a natural rubber or a synthetic rubber. The synthetic rubber used is not particularly limited and may be selected from, for example, butadiene rubber (BR), isoprene rubber (IR), styrene-butadiene copolymer rubber (SBR), butyl rubber (IIR), halogenated IIR, and ethylene-propylene-diene terpolymer (EPDM) according to application.

A graphitized carbon material used for the rubber composition according to the present invention may be a carbon material including regularly arranged graphene sheets, such as graphitized carbon black, vapor-grown carbon fiber (VGCF®), or graphite. Among them, VGCF® is preferred.

The polycyclic aromatic compound used for the rubber composition according to the present invention has a crosslinking group, which is a thiol group or a maleimide group in the specific compounds selected.

The graphitized carbon material and the polycyclic aromatic compound having a crosslinking group are added to the rubber component. The rubber composition according to the present invention exhibits a secondary dispersion peak (high loss) in addition to a primary dispersion peak (the glass transition of the matrix rubber) in the temperature dependence of loss tangent (tanδ). The rubber composition thus provides high loss characteristics after vulcanization without impairment of other properties such as breaking characteristics.

To achieve the above effect, the graphitized carbon material is preferably added in an amount of 0.1 to 100 parts by mass based on 100 parts by mass of the rubber component. In addition, the polycyclic aromatic compound having a crosslinking group is preferably added in an amount of 0.005 to 0.2 times the mass of the graphitized carbon material. The desired effect can also be achieved if carbon black is added to the rubber composition according to the present invention. The amount of carbon black added is preferably 0.1 to 50 times the mass of the graphitized carbon material.

The carbon black used for the rubber composition according to the present invention is not particularly limited and may be, for example, S315, N326 (ISAF-LS), N330 (HAF), N335, N339, N343, N347 (HAF-HS), N351, N356, N358, N375, N539, N550 (FEF), or N582. Among them, N326 (ISAF-LS), N330 (HAF), N335, N339, N343, and N347 (HAF-HS) are preferred for improvements in both modulus and breaking characteristics, and N326 (ISAF-LS) and N330 (HAF) are particularly preferred. The above carbon blacks may be used alone or in any combination of two or more of them.

The rubber composition according to the present invention is vulcanized by adding a crosslinking agent and then heating the composition. Any crosslinking agent that can be used for crosslinking of general rubber compositions may be used. Examples of such crosslinking agents include organic peroxides, sulfur, and organic sulfur compounds. If sulfur or an organic sulfur compound is used, a vulcanization accelerator generally used in the rubber industry may be optionally used.

Other various components generally used in the rubber industry, including an inorganic filler, an antiaging agent, and a vulcanization aid, may be optionally added to the rubber composition according to the present invention.

The rubber composition according to the present invention may suitably be applied to various rubber products, such as tires. In the temperature range providing a secondary dispersion of tanδ, the higher the value of tanδ, the higher the grip property. Accordingly, a tire having an improved grip property can be obtained by applying the rubber composition to the tread material of the tire.

### Examples

The present invention will be specifically described with reference to the examples below.

### Examples 1 to 6 and Comparative Examples 1 to 5

Rubber compositions of Examples 1 to 6 and Comparative Examples 1 to 5 were prepared according to the compositions shown in Tables 1 and 2 (where the values are represented in parts by mass). These rubber compositions were kneaded using a 250-mL kneader ("Laboplastomill" manufactured by Toyo Seiki Seisaku-sho, Ltd.) and were formed into sheets using a 3-inch roller. These sheets were vulcanized at 150°C for 1.5 times the time (t₉₀) that elapsed until an increase in torque due to the vulcanization reaction reached 90% of the maximum value, so that samples for use in measurements were obtained. These samples were subjected to the tests described below.

### (1) Tensile test

According to JIS (Japanese Industrial Standards) K6301 (1995), the samples were cut into dumbbell-shaped specimens (dumbbell No. 3) and were subjected to a tensile test at room temperature (25°C) to measure tensile elongation Eb (%) and tensile strength Tb.

### (2) Loss characteristics (dynamic loss characteristics)

The tanδ of each of the samples was measured at a strain of 1%, a frequency of 15 Hz, and a temperature of 60°C using a rheometer ("ARES" manufactured by Rheometrics Scientific Inc.).

### (3) Primary dispersion temperature

The temperature dependence of the tanδ of each sample in the temperature range of -80°C to 100°C was measured at a strain of 0.1%, a frequency of 15 Hz, and a rate of temperature increase of 4°C/min using a rheometer ("ARES" manufactured by Rheometrics Scientific Inc.). The primary dispersion temperature was determined at the highest tanδ.

With respect to the above (1) and (2), Tables 1 and 2 show the measurements, which are expressed in terms of indices determined with respect to the values of Comparative Example 1 as 100. For each item, higher indices indicate better results.

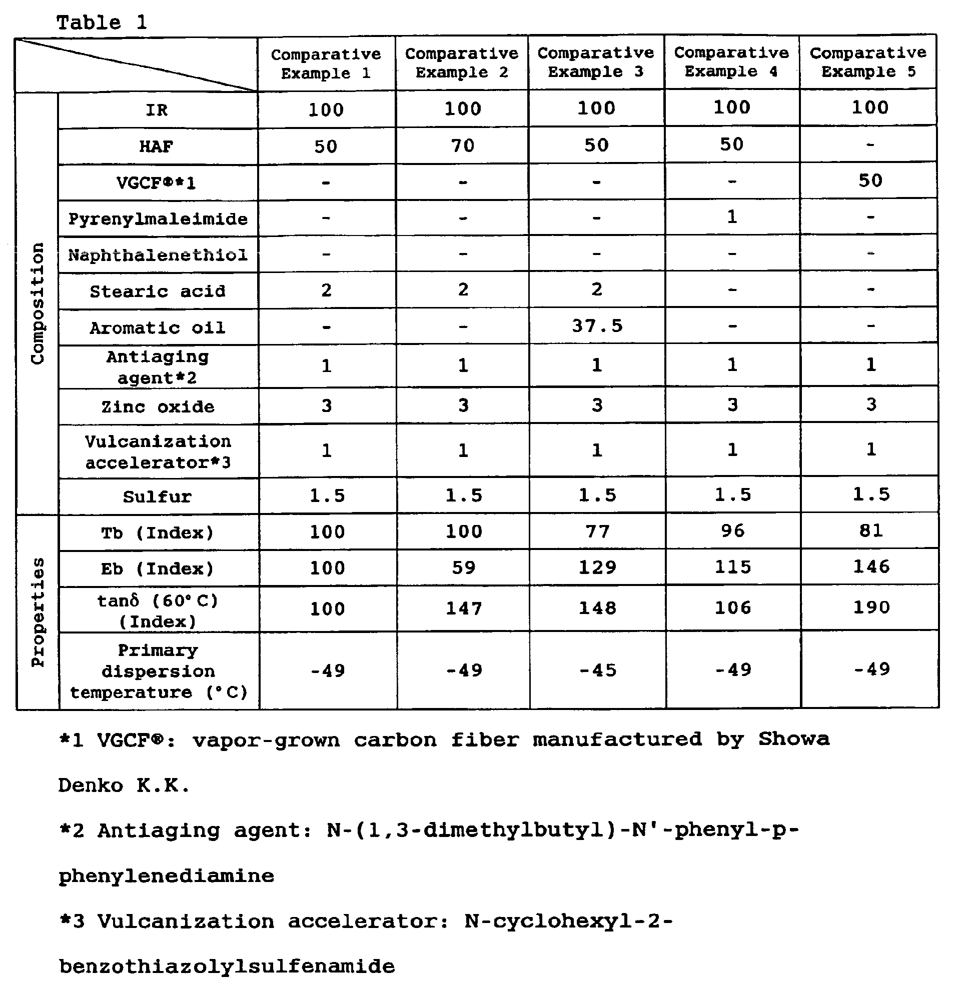

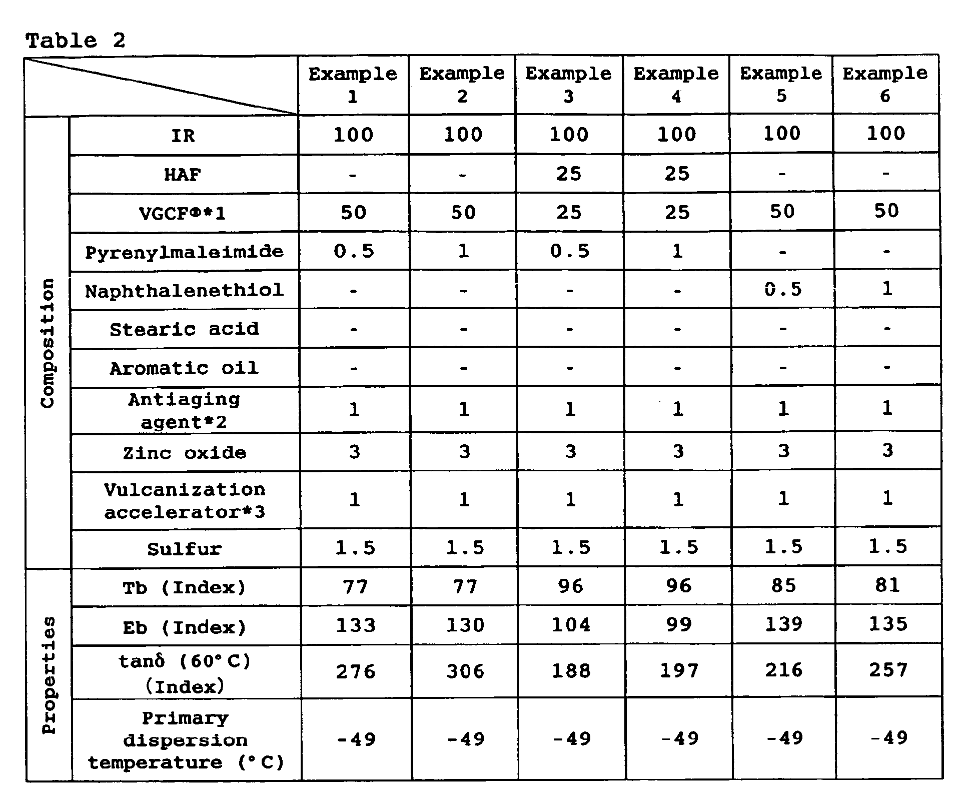

Tables 1 and 2 show that the rubber compositions of Examples 1 to 6 had tensile strengths Tb and tensile elongations Eb similar to those of the rubber compositions of Comparative Examples 1 to 5 and had higher loss characteristics than the rubber compositions of Comparative Examples 1 to 5.

## Claims

1. A rubber composition comprising:
at least one rubber component selected from the group consisting of natural rubbers and synthetic rubbers;
a graphitized carbon material; and
a polycyclic aromatic compound having a crosslinking group and selected from pyrenylmaleimide and naphthalenethiol.

2. A rubber composition as claimed in claim 1, wherein the graphitized carbon material is vapor-grown carbon fiber.

3. A rubber composition as claimed in claim 1 or 2, wherein the content of the graphitized carbon material is 0.1 to 100 parts by mass based on 100 parts by mass of the rubber component.

4. A rubber composition as claimed in any of claims 1 to 3, wherein the content of the polycyclic aromatic compound is 0.005 to 0.2 times the mass of the graphitized carbon material.

5. A rubber composition as claimed in any of claims 1 to 4, further comprising carbon black.

6. A rubber composition as claimed in claim 5, wherein the content of the carbon black is 0.1 to 50 times the mass of the graphitized carbon material.

7. A tire wherein the rubber composition according to any of claims 1 to 6 is used as a tread material.

## Patentansprüche

1. Gummizusammensetzung umfassend:
mindestens eine Gummikomponente ausgewählt aus der Gruppe bestehend aus Naturgummi und synthetischen Gummis;
ein graphitisiertes Kohlenstoffihaterial; und
eine polycyclische aromatische Verbindung, die eine vernetzende Gruppe aufweist und unter Pyrenylmaleimid und Napththalinthiol ausgewählt ist.

2. Gummizusammensetzung nach Anspruch 1, wobei das graphitisierte Kohlenstoffmaterial dampfgezüchtete Kohlenstofffaser ist.

3. Gummizusammensetzung nach Anspruch 1 oder 2, wobei der Gehalt an graphitisiertem Kohlenstoffinaterial 0,1 bis 100 Massenteile, auf 100 Massenteile der Gummikomponente bezogen, beträgt

4. Gummizusammensetzung nach einem der Ansprüche 1 bis 3, wobei der Gehalt an polycyclischer aromatischer Verbindung 0,005 bis 0,2-mal die Masse des graphitisierten Koblenstoffmaterials beträgt.

5. Gummizusammensetzung nach einem der Ansprüche 1 bis 4, des Weiteren Ruß umfassend.

6. Gummizusammenensetzung nach Anspruch 5, wobei der Gehalt an Ruß 0,1 bis 50-mal die Masse des graphitisierten Kohlenstoffmaterials beträgt.

7. Reifen, wobei die Gummizusammensetzung nach einem der Anspruche 1 bis 6 als Profilmaterial verwendet wird.

## Revendications

1. Composition de caoutchouc comprenant:
au moins un constituant de caoutchouc choisi dans le groupe constitué par les caoutchoucs naturels et les caoutchoucs synthétiques;
un matériau de carbone graphitisé; et
un composé aromatique polycyclique ayant un groupe de réticulation et choisi parmi le pyrénylmaleimide et le naphtalènethiol.

2. Composition de caoutchouc selon la revendication 1, dans laquelle le matériau de carbone graphitisé est une fibre de carbone développée à la vapeur.

3. Composition de caoutchouc selon la revendication 1 ou 2, dans laquelle la teneur en matériau de carbone graphitisé est de 0,1 à 100 parties en masse pour 100 parties en masse du constituant de caoutchouc.

4. Composition de caoutchouc selon l'une quelconque des revendications 1 à 3, dans laquelle la teneur en composé aromatique polycyclique est de 0,005 à 0,2 fois la masse du matériau de carbone graphitisé.

5. Composition de caoutchouc selon l'une quelconque des revendications 1 à 4, comprenant en outre du noir de carbone.

6. Composition de caoutchouc selon la revendication 5, dans laquelle la teneur en noir de carbone est de 0,1 à 50 fois la masse du matériau de carbone graphitisé.

7. Pneu dans lequel la composition de caoutchouc selon l'une quelconque des revendications 1 à 6 est utilisée en tant que matériau de bande de roulement.
